(19)

Europäisches
Patentamt

European
Patent Office

Office européen
des brevets

(11)  **EP 4 521 628 A1**

(12)  **EUROPEAN PATENT APPLICATION**

(43) Date of publication:
**12.03.2025   Bulletin 2025/11**

(51) International Patent Classification (IPC):
**H02P 21/32** (2016.01)          **H02P 25/026** (2016.01)

(21) Application number: **23219918.2**

(52) Cooperative Patent Classification (CPC):
**H02P 21/32; H02P 25/026**

(22) Date of filing: **22.12.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **07.09.2023   CN 202311153460**

(71) Applicant: **XPT EDS (Hefei) Co., Ltd.
Hefei City, Anhui 230601 (CN)**

(72) Inventors:
• **Zeng, Jun**
  **Hefei City 230601 (CN)**

• **Wang, Kai**
  **Hefei City 230601 (CN)**
• **Liu, Chang**
  **Hefei City 230601 (CN)**
• **Zhou, Daiping**
  **Hefei City 230601 (CN)**
• **Xu, Bin**
  **Hefei City 230601 (CN)**
• **Xia, Zekun**
  **Hefei City 230601 (CN)**
• **Hong, Wilson**
  **Hefei City 230601 (CN)**

(74) Representative: **Patentanwaltskanzlei
Matschnig & Forsthuber OG
Biberstraße 22
Postfach 36
1010 Wien (AT)**

(54)  **MOTOR POSITION CONTROL METHOD AND SYSTEM**

(57)     The disclosure relates to a motor position control method and system. A motor includes a stator and a rotor. The motor position control method includes: obtaining an initial position angle of the rotor; selecting working windings in a three-phase winding of the stator; obtaining in real time a real-time position angle of the rotor and a sampling current in each phase flowing through the working windings; and determining a duty cycle in each phase of working winding based on the initial position angle, the real-time position angle, the sampling current in each phase, and an input current reference value, to substantially stabilize a position angle of the rotor at the initial position angle. The motor position control method in embodiments of the disclosure can resolve the unexpected torque problem caused under a condition that a non-zero direct-axis current vector is used for vehicle charging.

FIG. 1

EP 4 521 628 A1

**Description**

**TECHNICAL FIELD**

The disclosure relates to the field of vehicles, and specifically, to a motor position control method and system.

**BACKGROUND**

Currently, there is a problem that a supply voltage of a direct-current charging facility does not match a charging voltage of an electric vehicle. Generally, high-voltage platforms for electric vehicles in the market mainly uses a 400-V direct-current voltage. With an increasing demand for higher charging efficiency in the market and an increasing development of a related part and component technology, manufacturers and suppliers start research and development of 800-V or higher-voltage platforms.

However, in a current use scenario of electric vehicles, a rated output voltage of a direct-current charging pile is generally 200 V to 1000 V, for example, mainly including 500 V, 750 V, and 1000 V. If the rated output voltage of the direct-current charging pile is less than 800 V, it is difficult for the charging pile to meet a charging requirement of a traction battery with the 800-V or higher-voltage platform.

Therefore, during research and development of higher-voltage platforms for electric vehicles, an existing direct-current charging pile usually provides a lower output voltage and thus cannot meet a charging requirement.

**SUMMARY**

In embodiments of the disclosure, a vehicle motor and a motor drive system may be reused for voltage conversion, to implement boost charging. During boost charging, equal currents in all phases may be used to control a three-phase winding of a motor stator, to maintain a motor rotor at a zero-torque state. In this case, a direct-axis vector obtained through synthesis of the currents in all the phases is zero. Under a condition that currents in phases of windings of the three-phase winding of the motor are different, a distribution ratio of the currents in all the phases may be controlled, to ensure that a current vector obtained through synthesis of a stator winding is located on a direct axis, and also to ensure a zero torque. However, in a charging process, the motor rotor may be in an unstable state due to factors such as a sampling error of a current sensor and a calibration error of a rotary transformer, and thus may perform unexpected rotation.

Embodiments of the disclosure provide a motor position control method and system. A current position of a rotor is monitored in real time, to ensure that the rotor stably operates near an initial position all the time, thereby resolving the unexpected torque problem caused by a non-zero direct-axis current vector to vehicle charging and the potential noise, vibration and harshness (NVH) problem.

According to an aspect of the disclosure, a motor position control method is provided. The motor includes a stator and a rotor. The motor position control method includes: obtaining an initial position angle of the rotor; selecting working windings from a three-phase winding of the stator; obtaining in real time a real-time position angle of the rotor and a sampling current in each phase flowing through the working windings; and determining a duty cycle in each phase of working winding based on the initial position angle, the real-time position angle, the sampling current in each phase, and an input current reference value, to substantially stabilize a position angle of the rotor at the initial position angle.

In some embodiments of the disclosure, optionally, the determining a duty cycle in each phase of working winding based on the initial position angle, the real-time position angle, the sampling current in each phase, and an input current reference value includes: performing closed-loop angle correction based on the initial position angle and the real-time position angle, to obtain a corrected angle value; and determining the duty cycle in each phase based on the sampling current in each phase, the corrected angle value, and the input current reference value.

In some embodiments of the disclosure, optionally, the determining the duty cycle in each phase based on the sampling current in each phase, the corrected angle value, and the input current reference value includes: performing current request slope limitation on the input current reference value, to obtain a slope-limited input current; distributing currents in the phases of working windings based on the corrected angle value and the slope-limited input current, to obtain a reference current in each phase of working winding; and performing current loop control based on the reference current in each phase and the sampling current in each phase, to output the duty cycle in each phase.

In some embodiments of the disclosure, optionally, the determining the duty cycle in each phase based on the sampling current in each phase, the corrected angle value, and the input current reference value includes: determining, for the working windings based on the real-time position angle, a Kp parameter and a Ki parameter that are used for current loop control; performing current distribution on the working windings based on the input current reference value and the corrected angle value, to obtain a reference current in each phase; and performing the current loop control based on the reference current in each phase, the Kp parameter, and the Ki parameter, to output the duty cycle in each phase.

In some embodiments of the disclosure, optionally, the performing closed-loop angle correction based on the initial position angle and the real-time position angle, to obtain a corrected angle value includes: determining, based on the input current reference value, a Kp parameter and a Kd parameter that are used for position loop control; performing the position loop control based on the real-time position angle, the initial position angle, the Kp parameter, and the Kd parameter, to output an angle offset; and determining the corrected angle value based on the real-time position angle and the angle offset.

In some embodiments of the disclosure, optionally, the determining a duty cycle in each phase of working winding based on the initial position angle, the real-time position angle, the sampling current in each phase, and an input current reference value includes: obtaining a real-time rotational speed of the rotor in real time; determining a corrected current value based on the real-time position angle, the initial position angle, and the real-time rotational speed; and determining the duty cycle in each phase based on the sampling current in each phase, the corrected current value, and the input current reference value.

In some embodiments of the disclosure, optionally, the determining the duty cycle in each phase based on the sampling current in each phase, the corrected current value, and the input current reference value includes: performing slope limitation on the input current reference value, to obtain a slope-limited input current; distributing currents in the phases of working windings based on the corrected current value and the slope-limited input current, to obtain a reference current in each phase of working winding; and performing current loop control based on the reference current in each phase and the sampling current in each phase, to output the duty cycle in each phase.

In some embodiments of the disclosure, optionally, the determining the duty cycle in each phase based on the sampling current in each phase, the corrected current value, and the input current reference value includes: determining, for the working windings based on the real-time position angle, a Kp parameter and a Ki parameter that are used for current loop control; performing current distribution on the working windings based on the input current reference value and the corrected current value, to obtain a reference current in each phase; and performing the current loop control based on the reference current in each phase, the Kp parameter, and the Ki parameter, to output the duty cycle in each phase.

In some embodiments of the disclosure, optionally, the determining a corrected current value based on the real-time position angle, the initial position angle, and the real-time rotational speed includes: performing position loop control based on the real-time position angle and the initial position angle, to output a reference rotational speed; performing rotational speed loop control based on the reference rotational speed and the real-time rotational speed, to output a reference torque; and converting the reference torque into the corrected current value.

In some embodiments of the disclosure, optionally, the motor is included in a vehicle. The motor position control method is performed when a battery of the vehicle is charged. The input current reference value is determined by a battery management system of the battery.

In some embodiments of the disclosure, optionally, the selecting working windings in a three-phase winding of the stator includes: selecting two phases of windings with a larger generated inductance value in the three-phase winding of the stator as working windings based on the initial position angle.

According to another aspect of the disclosure, a motor position control system is provided. The motor position control system includes: a memory configured to store instructions; and a processor configured to execute the instructions to cause the motor position control system to perform any one of the motor position control methods described above.

According to still another aspect of the disclosure, a vehicle is provided. The vehicle includes any one of the motor position control systems described above.

According to yet another aspect of the disclosure, a computer-readable storage medium is provided. The computer-readable storage medium store instructions. The instructions, when executed by a processor, cause the processor to perform any one of the motor position control methods described above.

## BRIEF DESCRIPTION OF DRAWINGS

The above and other objectives and advantages of the disclosure will be more thorough and clearer from the following detailed description in conjunction with the drawings, where the same or similar elements are represented by the same reference numerals.

FIG. 1 is a schematic diagram of a circuit structure in which a motor winding is reused for boost charging of a battery according to an embodiment of the disclosure;

FIG. 2A and FIG. 2B illustrate a correspondence between an initial position angle of a rotor and selection of working windings under a condition that two phases of windings are selected for non-zero direct-axis current charging according to an embodiment of the disclosure;

FIG. 3A illustrates a case in which an unexpected torque is generated when two working windings are used for charging;

FIG. 3B illustrates a case in which an unexpected torque is generated when three working windings are used for charging;

FIG. 4 is a schematic flowchart of a motor position control method according to an embodiment of the disclosure;

FIG. 5A is a schematic flowchart of a method for determining a duty cycle in each phase of working winding by using a closed-loop angle control policy according to one or more embodiments of the disclosure;

FIG. 5B is a schematic flowchart of a method for determining a duty cycle in each phase of working winding by using a dual-loop control policy according to one or more embodiments of the disclosure;

FIG. 6A is a schematic flowchart of an embodiment of a method for determining a duty cycle in each phase of working winding under a condition of using a closed-loop angle control policy;

FIG. 6B is a schematic flowchart of another embodiment of a method for determining a duty cycle in each phase of working winding under a condition of using a closed-loop angle control policy;

FIG. 7 is a schematic flowchart of a method for performing closed-loop angle correction according to an embodiment of the disclosure;

FIG. 8A is a schematic flowchart of an embodiment of a method for determining a duty cycle in each phase of working winding under a condition of using a dual-loop control policy;

FIG. 8B is a schematic flowchart of another embodiment of a method for determining a duty cycle in each phase of working winding under a condition of using a dual-loop control policy;

FIG. 9 is a schematic flowchart of a method for performing dual-loop control according to an embodiment of the disclosure; and

FIG. 10 is a schematic diagram of a structure of a motor position control system according to an embodiment of the disclosure.

## DESCRIPTION OF EMBODIMENTS

For the sake of brevity and illustrative purposes, the principles of the disclosure are mainly described herein with reference to its exemplary embodiments. However, those skilled in the art can easily appreciate that the same principle can be equivalently applied to all types of motor position control methods and systems, and a same or similar principle can be implemented therein. These variations do not depart from the true spirit and scope of the disclosure.

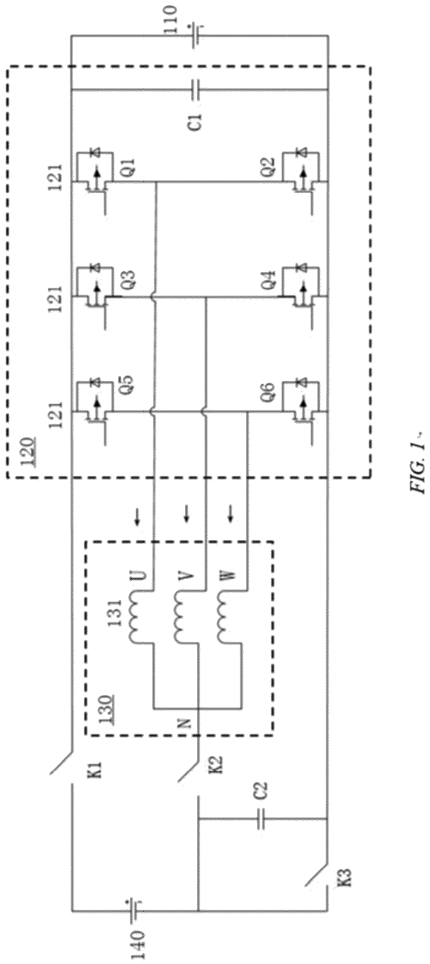

The following describes, with reference to FIG. 1, a method for boost charging of a battery 110 by reusing a motor winding according to one or more embodiments of the disclosure.

FIG. 1 is a schematic diagram of a circuit structure in which the motor winding is reused for the boost charging of the battery 110 according to one or more embodiments of the disclosure. In embodiments of the disclosure, a motor 130 and a motor drive system 120 are reused to implement a boost charging operation of the battery 110. As shown in FIG. 1, the battery 110 is connected to the motor 130 through the drive circuit 120. In some embodiments, the battery 110 may be a traction battery for providing a power source for a vehicle (for example, an electric vehicle). The motor 130 may be a synchronous motor used in the vehicle to drive wheels to run. Optionally, the battery 110 may be equipped with a battery management system (BMS). The BMS may be configured to monitor and maintain a status of the battery 110.

The motor 130 includes a stator and a rotor. The stator may include a three-phase winding 131. For convenient illustration, a dashed box for accommodating the three-phase winding 131 represents the motor 130 in FIG. 1. As shown in FIG. 1, the three-phase winding 131 includes a U-phase winding, a V-phase winding, and a W-phase winding. One connection terminal of each phase of winding in the three-phase winding 131 is connected to each other to form a neutral point N, and the other connection terminal of each phase is connected to the drive circuit 120.

As shown in FIG. 1, the drive circuit 120 may include a first capacitor C1 and three bridge arms 121. Each of the three bridge arms 121 is connected to a corresponding winding in the three-phase winding 131. In this specification, for convenience of description, a bridge arm correspondingly connected to the U-phase winding is referred to as a U-phase bridge arm, a bridge arm correspondingly connected to the V-phase winding is referred to as a V-phase bridge arm, and a bridge arm correspondingly connected to the W-phase winding is referred to as a W-phase bridge arm. In the drive circuit 120, the first capacitor C1, the U-phase bridge arm, the V-phase bridge arm, and the W-phase bridge arm are connected to each other in parallel.

In the drive circuit 120, each of the three bridge arms 121 may include a corresponding upper bridge arm and a corresponding lower bridge arm. As shown in FIG. 1, the U-phase winding is connected to the U-phase bridge arm. A connection terminal of the U-phase winding to the U-phase bridge arm divides the U-phase bridge arm into an upper U-phase bridge arm Q1 and a lower U-phase bridge arm Q2. The V-phase winding is connected to the V-phase bridge arm. A connection terminal of the V-phase winding to the V-phase bridge arm divides the V-phase bridge arm into an upper V-phase bridge arm Q3 and a lower V-phase bridge arm Q4. The W-phase winding is connected to the W-phase bridge arm. A connection terminal of the W-phase winding to the W-phase bridge arm divides the W-phase bridge arm into an upper W-phase bridge arm Q5 and a lower W-phase bridge arm Q6. As shown in FIG. 1, the upper bridge arm and the corresponding lower bridge arm of each bridge arm 121 may be each formed by a field effect transistor (a MOS transistor) and a diode that are connected in parallel.

As shown in FIG. 1, the battery 110 is connected to each of the first capacitor C1, the U-phase bridge arm, the V-phase bridge arm, and the W-phase bridge arm in the drive circuit 120 in parallel. Under a condition that the battery 110 needs to be charged, a positive electrode charging side of a direct-current charging apparatus 140 (for example, a direct-current charging pile) may be connected to a positive electrode terminal of the battery 110 through a first relay K1, and a negative electrode charging side of the direct-current charging apparatus 140 is connected to the neutral point N of the three-phase winding 131 through a second relay K2 and also connected to a negative electrode terminal of the battery 110 through a third relay K3. As shown in FIG. 1, a second capacitor C2 may be connected between a terminal of the second relay K2 away from the neutral point N and a terminal of the third relay K3 away from the direct-current charging apparatus 140.

Under a condition that the direct-current charging apparatus 140 meets a condition of directly charging the battery 110, the direct-current charging apparatus 140 may directly charge the battery 110 to meet a charging requirement of the battery 110. In this embodiment of the disclosure, under a condition that the direct-current charging apparatus 140 does not meet a condition of directly charging the battery 110, the motor winding may perform boost charging on the battery 110 to meet a charging requirement of the battery 110. In some embodiments, that a charging voltage of the direct-current charging apparatus 140 is greater than an open-circuit voltage of the battery 110 may be considered as that the direct-current charging apparatus 140 meets the condition of directly charging the battery 110.

As shown in FIG. 1, the circuit structure in which the motor winding is reused for boost charging of the battery 110 may meet a requirement of directly charging the battery 110 by the direct-current charging apparatus 140 and a requirement of performing boost charging on the battery 110 by the motor winding. As shown in FIG. 1, when the charging pile is used for directly charging the battery, the second relay K2 may be turned off, and the first relay K1 and the third relay K3 are turned on at the same time. When the motor winding is used for performing boost charging on the battery 110, the third relay K3 may be turned off, the first relay K1 and the second relay K2 are turned on, the lower bridge arms Q2, Q4, and Q6 are maintained in an off state, and the upper bridge arms Q1, Q3, and Q5 are in an on state in response to a software control request. In some embodiments, duty cycles of the three upper bridge arms Q1, Q3, and Q5 corresponding to the three-phase winding 131 may be controlled to control on states of the working windings in the three-phase winding 131.

In some embodiments, a current sensor and a rotary transformer may be further disposed in the circuit structure in which the motor winding is reused for boost charging of the battery 110. The current sensor may be configured to sample currents in the phases of windings in the three-phase winding 131. The rotary transformer may be configured to monitor a position and a rotational speed of the rotor in the motor 130. For example, before the vehicle is charged, the rotary transformer may be used for obtaining an initial position angle of the rotor. When the vehicle is charged, the rotary transformer may be used for obtaining a real-time position angle and a real-time rotational speed of the rotor in real time, and the current sensor may be used for obtaining in real time a sampling current in each phase flowing through the working windings in the three-phase winding 131.

In this embodiment of the disclosure, a hardware topological structure shown in FIG. 1 may be used for boost charging of the battery 110. A motor position control policy may be used for ensuring that the rotor is in a stable state during charging. However, it should be understood that the boost charging and the motor position control policy provided in the disclosure may not be limited to being applied to the foregoing topological structure.

Under a condition that the motor winding is used for boost charging of the battery 110, appropriate phases of windings may be selected in the three-phase winding 131 of the stator to be used as the working windings, and currents flowing through the working windings are controlled, such that a torque of the motor 130 is outputted to be zero or approximately zero. In some embodiments, either one of the two manners "zero direct-axis current charging" and "non-zero direct-axis current charging" may be used for ensuring that the rotor is in a zero-torque state.

The "zero direct-axis current charging" manner indicates a charging manner in which a direct-axis vector of a current synthesized by the phases of windings is zero. In an embodiment of the "zero direct-axis current charging", all windings in the three-phase winding 131 may be used as working windings, and currents in the three phases of working windings are controlled to be equal to balance the currents in the three phases and to ensure that the rotor of the motor 130 is in the zero-torque state. In this case, the direct-axis vector synthesized from the currents in all the phases is zero. Therefore, this charging manner is referred to as the "zero direct-axis current charging" manner in the specification.

The "non-zero direct-axis current charging" manner indicates a charging manner in which a vector of a current synthesized by the phases of windings is in a direct axis. In some embodiments, two or three phases of windings in the three-phase winding 131 may be selected as working windings, and a vector obtained through synthesis of currents in the working windings is controlled to be located in the direct axis to ensure that the rotor of the motor 130 is in the zero-torque state. Under a condition that the vector obtained through synthesis of the currents in the three-phase winding 131 is located in the direct axis, an equivalent magnetic field of the stator coincides with a magnetic field of a permanent magnet of the rotor. Therefore, the rotor is in the zero-torque state. This charging manner is referred to as the "non-zero direct-axis current charging" manner in the specification. For example, under a condition that the three-phase winding is used for non-zero direct-axis current charging, a current in one phase of winding may be set to be equal to a sum of currents in the other two phases of windings, such that the vector obtained through synthesis of the currents in the three-phase winding 131 is located in the direct axis.

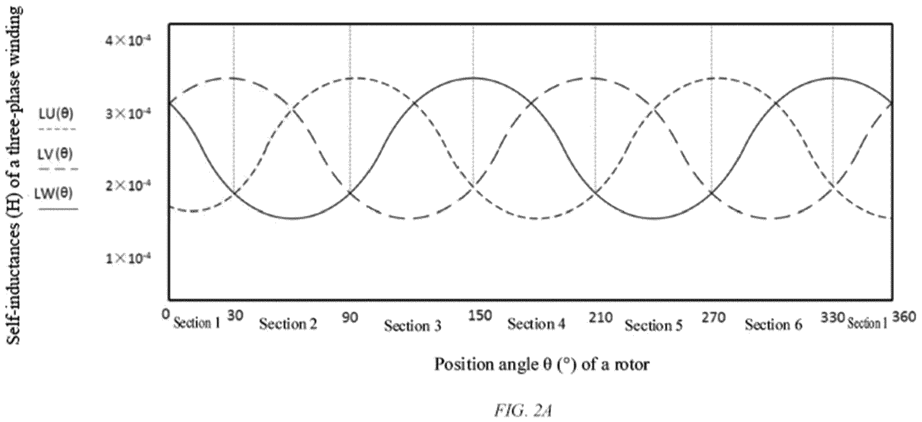

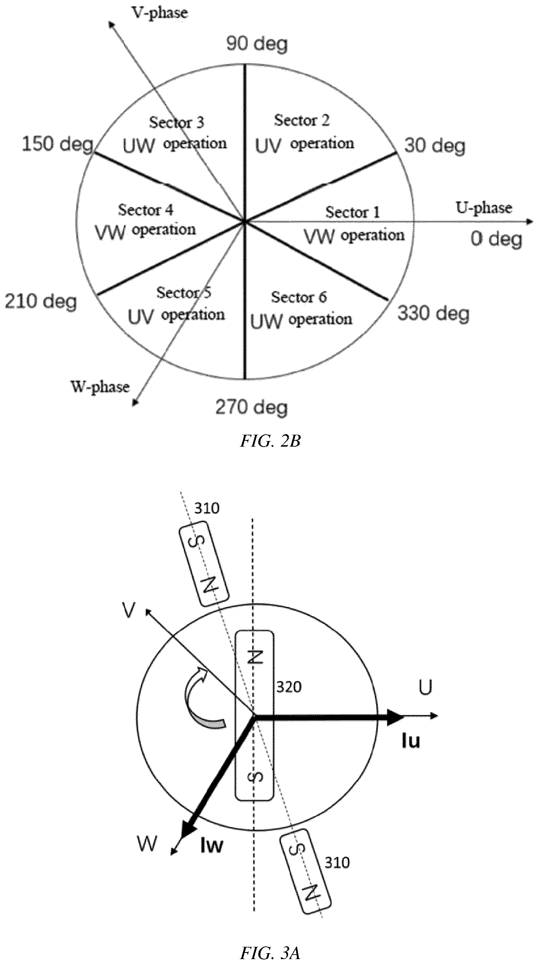

The following describes, with reference to FIG. 2A and FIG. 2B, a correspondence between an initial position angle of a rotor and selection of working windings under a condition that two phases of windings are selected for non-zero direct-axis current charging according to one or more embodiments of the disclosure. In the embodiments shown in FIG. 2A and FIG. 2B, to maximize the use of winding inductance for voltage conversion, before the battery 110 of the vehicle is charged, the two phases of windings with a larger generated inductance value in the three-phase winding 131 may be selected as working windings based on the initial position angle of the rotor. In this embodiment of the disclosure, after the two phases of windings are determined as the working windings, the selection of the working windings is no longer adjusted in a charging process, unless a current charging mode is quit and another charging process is started.

FIG. 2A illustrates a corresponding inductance value of each phase of winding in the three-phase winding 131 of the stator under different position angles θ of the rotor of the motor. As shown in FIG. 2A, in some embodiments, the inductance value of each phase of winding may change as the position angle θ of the rotor changes (for example, within a range from 0° to 360°). That is, the inductance value of each phase of winding may be a function of the position angle θ of the rotor. For convenience of description, self-inductances LU(θ), LV(θ), and LW(θ) respectively indicate functions of inductance values of the U-phase winding, the V-phase winding, and the W-phase winding relative to the position angle θ of the rotor in the specification. As shown in FIG. 2A, in some embodiments, the self-inductances LU(θ), LV(θ), and LW(θ) may be trigonometric functions. Any two of the self-inductances have different phases.

The position angle θ of the rotor may be divided into a plurality of sections based on changes of the self-inductances LU(θ), LV(θ), and LW(θ) with the position angle θ of the rotor. In each section, there is a case in which inductance values of two phases of windings are greater than an inductance value of the remaining one phase of winding all the time. To maximize the use of winding inductance for voltage conversion, the two phases of windings with a larger generated inductance value may be selected as working windings based on the position angle θ of the rotor. As shown in FIG. 2A, the position angle θ (from 0° to 360°) of the rotor may be divided into six sections as follows:

Section 1: From 330° to 30° (360° coincides with 0°). Inductance values of the V-phase winding and the W-phase winding are greater than an inductance value of the U-phase winding all the time.
Section 2: From 30° to 90°. Inductance values of the U-phase winding and the V-phase winding are greater than an inductance value of the W-phase winding all the time.
Section 3: From 90° to 150°. Inductance values of the U-phase winding and the W-phase winding are greater than an inductance value of the V-phase winding all the time.
Section 4: From 150° to 210°. Inductance values of the V-phase winding and the W-phase winding are greater than an inductance value of the U-phase winding all the time.
Section 5: From 210° to 270°. Inductance values of the U-phase winding and the V-phase winding are greater than an inductance value of the W-phase winding all the time.
Section 6: From 270° to 330°. Inductance values of the U-phase winding and the W-phase winding are greater than an inductance value of the V-phase winding all the time.

It can be learned that in the section 1 and the section 4 of the position angle θ of the rotor, the V-phase winding and the W-phase winding may be selected as the working windings. For the position angle θ of the rotor in the section 2 and the section 5, the U-phase winding and the V-phase winding may be selected as the working windings. For the position angle θ of the rotor in the section 3 and the section 6, the U-phase winding and the W-phase winding may be selected as the working windings.

In FIG. 2B, a sector manner is used for representing a correspondence between the position angle θ of the rotor and the selection of the working windings. In FIG. 2B, a direction of a magnetic field synthesized by the U-phase winding is marked as a 0° position angle θ of the rotor. An anticlockwise rotation direction is marked as a forward rotation direction of the position angle θ of the rotor. One circle of anticlockwise rotation is 360°. A 360° position angle θ of the rotor coincides with the 0° position angle θ. As shown in FIG. 2B, under a condition that the direction of the magnetic field synthesized by the U-phase winding corresponds to the 0° position angle θ of the rotor, a direction of a magnetic field synthesized by the V-phase winding may correspond to a 120° position angle θ of the rotor, and a direction of a magnetic field synthesized by the W-phase winding may correspond to a 240° position angle θ of the rotor.

In FIG. 2B, a sector 1 to a sector 6 are named in sequence in an anticlockwise direction. It can be learned with reference to FIG. 2A and FIG. 2B that the sector 1 corresponds to the section 1 and indicates a position angle θ of the rotor ranging from 330° to 30°. Within this range, the V-phase winding and the W-phase winding may be selected as the working windings. The sector 2 corresponds to the section 2 and indicates a position angle of the rotor ranging from 30° to 90°. Within this range, the U-phase winding and the V-phase winding may be selected as the working windings. The sector 3 corresponds to the section 3 and indicates a position angle of the rotor ranging from 90° to 150°. Within this range, the U-phase winding and the W-phase winding may be selected as the working windings. The sector 4 corresponds to the section 4 and indicates a position angle of the rotor ranging from 150° to 210°. Within this range, the V-phase winding and the W-phase winding may be selected as the working windings. The sector 5 corresponds to the section 5 and indicates a position angle of the rotor ranging from 210° to 270°. Within this range, the U-phase winding and the V-phase winding may be selected as the working windings. The sector 6 corresponds to the section 6 and indicates a position angle of the rotor ranging from 270° to 330°. Within this range, the U-phase winding and the W-phase winding may be selected as the working windings.

In an embodiment in which two phases of windings in the three-phase winding 131 are selected for charging, before the battery 110 is charged, the initial position angle θ of the rotor may be obtained by using the rotary transformer, and the two corresponding phases of windings are selected as the working windings based on the section or the sector in which the initial position angle θ is located in FIG. 2A or FIG. 2B. It should be noted that the embodiments in FIG. 2A and FIG. 2B merely describe an example of division of the sections or the sectors. Other embodiments may not be limited to the current angle definition of the sections or the sectors.

For example, if an electrical angle of the rotor at a current position obtained by using the rotary transformer is 10 degrees, the V-phase winding and the W-phase winding may be selected for boost charging in FIG. 2A or FIG. 2B. When the V-phase winding and the W-phase winding are used for boost charging, as shown in FIG. 1, the third relay K3 may be turned off, the first relay K1 and the second relay K2 are turned on, the upper bridge arm Q1 is also turned off, and the upper bridge arms Q3 and Q5 are controlled to be turned on or off based on a duty cycle signal that is in response to a software request. When the upper bridge arms Q3 and Q5 are turned on, the direct-current charging apparatus 140 and the motor winding form a closed loop, so that the motor winding can be charged to store energy. When the upper bridge arms Q3 and Q5 are turned off, fly-wheel diodes in the corresponding lower bridge arms Q4 and Q6 may be turned on, so that the battery 110 is charged by the energy stored in the motor winding.

To ensure no torque generated during charging, currents of the two phases of working windings need to be appropriately distributed. In other words, there is a need to ensure that an quadrature-axis current is zero. The following Table 1 describes an embodiment of current distribution of the working windings based on the initial position angle θ of the rotor, where Iin represents a current of a charging pile.

Table 1 A relationship between a position angle θ of a rotor and current distribution of a three-phase winding in embodiments of the disclosure

| Sector | Position angle range | U | V | W |
|---|---|---|---|---|
| 1 | [330,360) [0,30) | 0 | $\left[\frac{1}{2} - \frac{\sqrt{3}}{6} * \tan\theta\right] * Iin$ | $[\frac{1}{2} + \frac{\sqrt{3}}{6} * \tan\theta] * Iin$ |
| 2 | [30,90) | $[\frac{1}{2} - \frac{\sqrt{3}}{6} * \tan(\theta + \frac{2\pi}{3})] * Iin$ | $[\frac{1}{2} + \frac{\sqrt{3}}{6} * \tan(\theta + \frac{2\pi}{3})] * Iin$ | 0 |
| 3 | [90,150) | $[\frac{1}{2} + \frac{\sqrt{3}}{6} * \tan(\theta - \frac{2\pi}{3})] * Iin$ | 0 | $[\frac{1}{2} - \frac{\sqrt{3}}{6} * \tan(\theta - \frac{2\pi}{3})] * Iin$ |
| 4 | [150,210) | 0 | $\left[\frac{1}{2} - \frac{\sqrt{3}}{6} * \tan\theta\right] * Iin$ | $[\frac{1}{2} + \frac{\sqrt{3}}{6} * \tan\theta] * Iin$ |
| 5 | [210,270) | $[\frac{1}{2} - \frac{\sqrt{3}}{6} * \tan(\theta + \frac{2\pi}{3})] * Iin$ | $[\frac{1}{2} + \frac{\sqrt{3}}{6} * \tan(\theta + \frac{2\pi}{3})] * Iin$ | 0 |
| 6 | [270,330) | $[\frac{1}{2} + \frac{\sqrt{3}}{6} * \tan(\theta - \frac{2\pi}{3})] * Iin$ | 0 | $[\frac{1}{2} - \frac{\sqrt{3}}{6} * \tan(\theta - \frac{2\pi}{3})] * Iin$ |

As described in Table 1, in some embodiments, under a condition that the position angle θ of the rotor is located in the sector 1 and the sector 4, a current in the U-phase winding is zero, a current in the V-phase winding is

$$\left[\frac{1}{2} - \frac{\sqrt{3}}{6} * \tan\theta\right] * Iin$$

, and a current in the W-phase winding is

$$[\frac{1}{2} + \frac{\sqrt{3}}{6} * \tan\theta] * Iin$$

. Under a condition that the position angle θ of the rotor is located in the sector 2 and the sector 5, a current in the U-phase winding is

$$[\frac{1}{2} - \frac{\sqrt{3}}{6} * tan(\theta + \frac{2\pi}{3})] * Iin$$

, a current in the V-phase winding is

$$[\frac{1}{2} + \frac{\sqrt{3}}{6} * tan(\theta + \frac{2\pi}{3})] * Iin$$

, and a current in the W-phase winding is zero. Under a condition that the position angle $\theta$ of the rotor is located in the sector 3 and the sector 6, a current in the U-phase winding is

$$[\frac{1}{2} + \frac{\sqrt{3}}{6} * tan(\theta - \frac{2\pi}{3})] * Iin$$

, a current in the V-phase winding is zero, and a current in the W-phase

$$[\frac{1}{2} - \frac{\sqrt{3}}{6} * tan(\theta - \frac{2\pi}{3})] * Iin$$

winding is                                                     .

The foregoing current distribution of the working windings can ensure that the current vector obtained through synthesis is located in the direct axis and the alternating-axis current is zero, thereby ensuring that the rotor is in the zero-torque state.

When non-zero direct-axis current charging is used and the rotor is ensured to be in the zero-torque state, based on different position angles of the rotor of the motor, the magnetic field generated by the stator of the motor and the magnetic field of the permanent magnet of the rotor may be in a same direction or may be in opposite directions. When the magnetic field generated by the stator and the magnetic field of the permanent magnet of the rotor are in the same direction, the permanent magnet of the rotor is in a magnetizing state. In this case, the magnetic field of the stator and the magnetic field of the permanent magnet of the rotor attract each other, the rotor does not have a stability problem, and it can be ensured that the rotor does not perform unexpected rotation. When the magnetic field generated by the stator and the magnetic field of the permanent magnet of the rotor are in the opposite directions, the permanent magnet of the rotor is in a demagnetizing state. In this case, the magnetic field of the stator and the magnetic field of the permanent magnet of the rotor repel each other, the rotor is in a critical stable state.

In an actual boost charging process, there may be problems such as an offset of the current sensor and a calibration error of the rotary transformer. Therefore, the equivalent magnetic field of the stator may not completely coincide with the magnetic field of the permanent magnet of the rotor. Under a condition that the magnetic field of the stator does not coincide with the magnetic field of the rotor, a torque may be generated on the rotor, and the torque may cause the rotor to rotate, causing an unexpected torque problem. In addition, under a condition that the magnetic field of the stator and the magnetic field of the rotor are in the opposite directions and the rotor is in the critical stable state, the rotor is in an increasingly unstable state due to factors such as a sampling error of the current sensor and the calibration error of the rotary transformer and finally may perform unexpected rotation, causing a potential NVH problem.

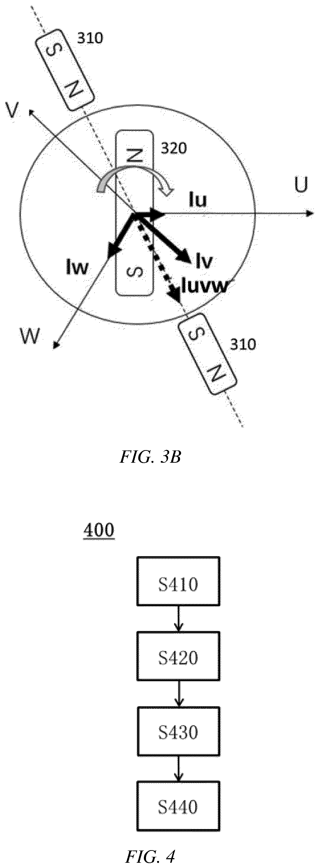

The following describes with reference to FIG. 3A and FIG. 3B a case in which an unexpected torque is generated when two phases of working windings and three phases of working windings are used for charging.

FIG. 3A illustrates a case in which an unexpected torque is generated when two phases of windings are used for charging. As shown in FIG. 3A, before the battery 110 is charged, a current position of the rotor at an electrical angle of 90 degrees is obtained. In this case, based on the correspondence in Table 1, the U-phase winding and the W-phase winding may be selected for charging, and the equivalent magnetic field 310 of the stator is also located in a position of 90 degrees through current distribution, so that the magnetic field 310 of the stator coincides with the magnetic field 320 of the rotor. For example, due to the sampling error of the current sensor and the calibration offset of the rotary transformer, the equivalent magnetic field 310 of the stator may be located in a position of 100 degrees and does not coincide with the magnetic field 320 of the rotor. As shown in FIG. 3A, when the equivalent magnetic field 310 of the stator is located in the position of 100 degrees, the unexpected torque causing the rotor to rotate clockwise may be generated on the rotor, causing the rotor to be in an unstable state.

FIG. 3B illustrates a case in which an unexpected torque is generated when three phase of windings are used for charging. As shown in FIG. 3B, under a condition that a current position of the rotor at an electrical angle of 90 degrees is obtained, the equivalent magnetic field of the stator needs to be also located in a position of 90 degrees through current distribution of the three-phase winding 131, so that the magnetic field of the stator coincides with the magnetic field of the rotor. For example, due to the sampling error of the current sensor and the calibration offset of the rotary transformer, the equivalent magnetic field of the stator may be located in a position of 100 degrees and does not coincide with the magnetic field of the rotor. As shown in FIG. 3B, when the equivalent magnetic field of the stator is located in the position of 100 degrees, the unexpected torque causing the rotor to rotate clockwise may be generated on the rotor, causing the rotor to be in an unstable state.

Due to the sampling offset of the current sensor and the calibration error of the rotary transformer, there may be an angle offset between a synthesized magnetic field actually generated by controlling currents in the stator and an actual direct axis. It can be learned through stress analysis with reference to FIG. 3A and FIG. 3B that, under a condition that there is a positive offset (that is, greater than an expected angle) between the actually generated magnetic field of the stator and the direct axis of the rotor, the magnetic field generated by the stator causes the rotor to rotate clockwise. In addition, in the embodiments shown in FIG. 3A and FIG. 3B, the magnetic field of the stator is opposite to the magnetic field of the rotor. Once the rotor rotates, because the magnetic field of the stator and the magnetic field of the rotor repel each other, a torque borne by the rotor is further increased, and finally the rotor has an offset of a larger angle, so that the unexpected torque is generated. Therefore, to ensure that the rotor is stable near an initial position all the time, it is necessary to control the position of the rotor.

The motor position control policy provided in embodiments of the disclosure can resolve the unexpected torque problem caused by a non-zero direct-axis current to boost charging. In the disclosure, a current distribution policy is used. A dynamic current adjustment process ensures that currents in the working windings participating in charging proportionately change, thereby ensuring that the synthesized magnetic field generated by the currents in the three-phase winding 131 is located near the direct axis of the motor all the time.

The following describes a motor position control method 400 according to one or more embodiments of the disclosure with reference to FIG. 4 to FIG. 9. The motor position control method 400 is performed when the battery 110 of the vehicle is charged, thereby ensuring that the rotor is kept near an initial operation position in a charging process all the time. For example, the motor position control method 400 may be performed by a motor position control system 1000.

FIG. 4 is a flowchart of a motor position control method 400 according to one or more embodiments of the disclosure. During charging performed when the rotor is in a magnetizing state or a demagnetizing state, the motor position control method 400 in embodiments of the disclosure may be used for ensuring that the rotor is in a stable state. As shown in FIG. 4, the motor position control method 400 includes steps S410 to S440.

In step S410, the initial position angle of the rotor is obtained. The "initial position angle of the rotor" described in the specification indicates a position angle at which the rotor is located at the beginning of the motor position control method 400. In some embodiments, the motor position control method 400 starts to be performed at the beginning when the battery 110 of the vehicle is charged. Therefore, the "initial position angle of the rotor" in the specification may alternatively indicate a position angle at which the rotor is located before the battery 110 of the vehicle is charged.

In step S420, the working windings are selected in the three-phase winding 131 of the stator. As described above, based on a charging requirement, three windings in the three-phase winding 131 may be selected as the working windings, or two windings in the three-phase winding 131 may be selected as the working windings based on the initial position angle of the rotor.

In an example shown in FIG. 4, step S420 is performed after step S410. Before the battery 110 of the vehicle is charged, if the two windings are selected as the working windings, step S410 may be performed to cause the rotary transformer to read the initial position angle of the motor rotor of the vehicle, and then step S420 is performed to select the working windings based on the read initial position angle. It should be understood that if the three windings are selected as the working windings, there is no need to select the working windings based on the initial position angle of the rotor. In this case, step S410 may alternatively be performed after step S420, or steps S410 and S420 may be simultaneously performed. Step S430 may be performed after steps S410 and 5420.

In step S430, the real-time position angle of the rotor and the sampling current in each phase flowing through the working windings are obtained in real time. In some embodiments, step S430 may further include: obtaining the real-time rotational speed of the rotor in real time. As described above, the rotary transformer may be used for obtaining the real-time position angle and the real-time rotational speed of the rotor in real time, and the current sensor may be used for obtaining in real time the sampling current flowing through each working winding. Step S440 may be performed after step S430.

In step S440, the duty cycle in each phase of working winding (selected in step S420) is determined based on an input current reference value, the initial position angle (obtained in step S410), the real-time position angle, and the sampling current in each phase (obtained in step S430), to substantially stabilize a position angle of the rotor at the initial position angle.

The "duty cycle in each phase" described in the specification indicates a ratio of power-on time of each working winding to total time in a pulse cycle. The "duty cycle in each phase" corresponds to the duty cycles of the three upper bridge arms Q1, Q3, and Q5 corresponding to the embodiment shown in FIG. 1. In this embodiment of the disclosure, current loop control in each phase may be used for outputting a corresponding duty cycle in each phase, so that an actual current in each phase can follow a distributed reference current.

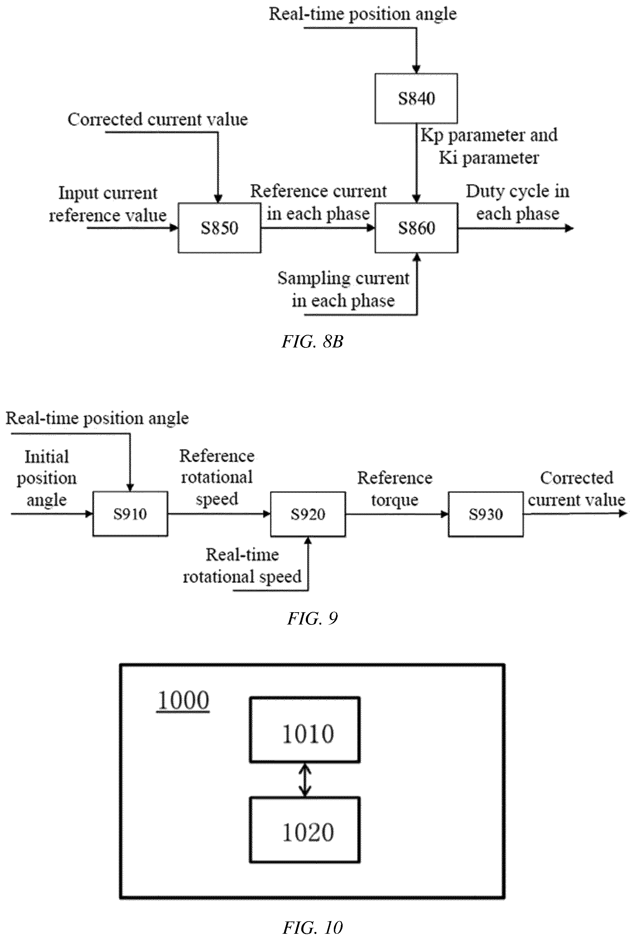

In some embodiments, the input current reference value indicates a reference value of a total current input to the working windings of the three-phase winding 131. For example, the input current reference value may be obtained through calculation based on a charging current requested by the BMS, a collected battery voltage, and a voltage at the charging pile end. Optionally, the BMS may transmit a charging current request signal to a power electronics unit (PEU) through a vehicle control unit (VCU), and then transmit the signal to the motor position control system 1000 (as shown in FIG. 10) through the PEU. For example, the input current reference value may be obtained in the following manner: calculating a charging power requested by the BMS based on the current requested by the BMS and the collected battery voltage, where the charging power requested by the BMS may be considered as an input end charging power; and then dividing the input end charging power by the voltage at the charging pile end to obtain through calculation the input current reference value. It can be understood that without consideration of an energy loss in a charging process, the input end charging power may be approximately considered as being equal to an output end power. Optionally, the input current reference value may be any current reference value from 0 to 100 A.

The "substantially stabilizing at the initial position angle" in the specification indicates that the position angle of the rotor may fluctuate within an electrical angle range of $\pm 2$ degrees about the initial position angle. That is, the motor position control method 400 may cause the position angle of the rotor to fluctuate within the electrical angle range of $\pm 2$ degrees about the initial position angle, so that the position angle of the rotor is substantially stabilized at the initial position angle.

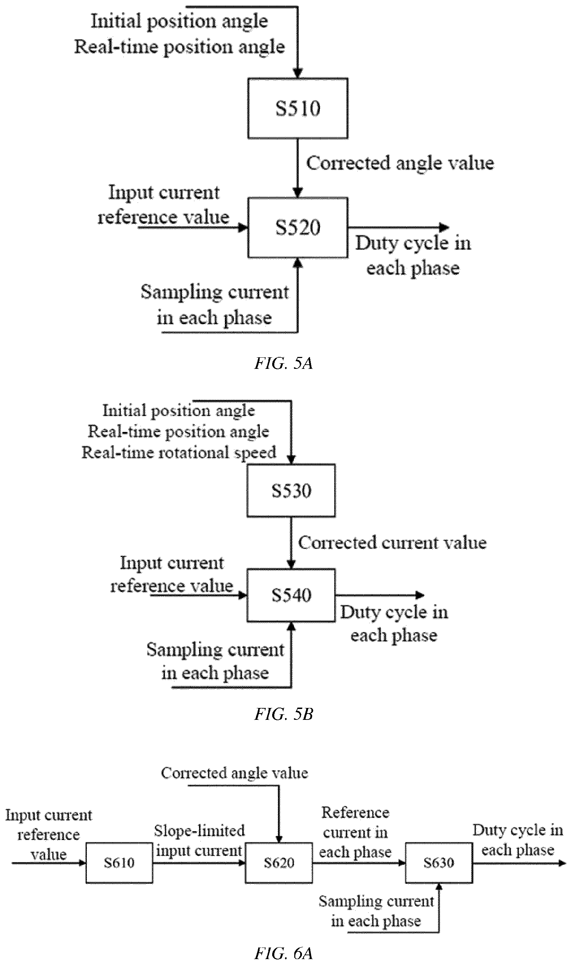

The following describes with reference to FIG. 5A to FIG. 9 a method for determining a duty cycle in each phase of working winding according to one or more embodiments of the disclosure. For example, the implementation of step S440 is described in FIG. 5A to FIG. 9. In some embodiments, the duty cycle in each phase of working winding may be determined based on the input current reference value, the initial position angle, the real-time position angle, and the sampling current in each phase by introducing a closed-loop angle control policy or a dual-loop control policy. FIG. 5A, FIG. 6A, and FIG. 7 describe an implementation in which the duty cycle in each phase of working winding is determined by using the closed-loop angle control policy. FIG. 5B, FIG. 8A, and FIG. 9 describe an implementation in which the duty cycle in each phase of working winding is determined by using the dual-loop control policy.

FIG. 5A is a schematic flowchart of a method for determining the duty cycle in each phase of working winding by using the closed-loop angle control policy according to one or more embodiments of the disclosure. As shown in FIG. 5A, the method for determining the duty cycle in each phase of working winding by using the closed-loop angle control policy may include steps S510 and 5520.

In step S510, closed-loop angle correction is performed based on the initial position angle and the real-time position angle of the rotor, to obtain a corrected angle value. After the corrected angle value is obtained in step S510, step S520 may be further performed.

In step S520, the duty cycle in each phase of working winding is determined based on the input current reference value, the corrected angle value, and the sampling current in each phase of working winding (for example, obtained in step S430). In some embodiments, the input current reference value may be obtained in a manner described above. Details are not described herein again.

FIG. 5B is a schematic flowchart of a method for determining the duty cycle in each phase of working winding by using the dual-loop control policy according to one or more embodiments of the disclosure. As shown in FIG. 5B, the method for determining the duty cycle in each phase of working winding by using the dual-loop control policy may include steps S530 and 5540.

In step S530, dual-loop control is performed based on the initial position angle, the real-time position angle, and the real-time rotational speed of the rotor, to obtain a corrected current value. After the corrected current value is obtained in step S530, step S540 may be further performed.

In step S540, the duty cycle in each phase of working winding is determined based on the input current reference value, the corrected current value, and the sampling current in each phase of working winding (for example, obtained in step S430). In some embodiments, the input current reference value may be obtained in a manner described above. Details are not described herein again.

It can be learned through comparison between FIG. 5A and FIG. 5B that, in the embodiment shown in FIG. 5A, under a condition that a current position angle of the rotor deviates from the initial position angle, the angle correction policy may be performed to obtain the corrected angle value, and the corrected angle value may participate in distributing the currents in all the phases of windings to stabilize the rotor near the initial position angle (for example, within the electrical angle range of $\pm 2$ degrees); and in the embodiment shown in FIG. 5B, under a condition that a current position angle of the rotor deviates from the initial position angle, the dual-loop control policy is performed to obtain the corrected current value, so that distribution of the currents in all the phases of windings is directly corrected to stabilize the rotor near the initial position angle (for example, within the electrical angle range of $\pm 2$ degrees).

FIG. 6A is a schematic flowchart of an embodiment of a method for determining the duty cycle in each phase of working winding based on the input current reference value, the corrected angle value, and the sampling current in each phase of working winding under a condition of using the closed-loop angle control policy. For example, the implementation of step S520 is described in FIG. 6A. As shown in FIG. 6A, the method for determining the duty cycle in each phase of working winding based on the input current reference value, the corrected angle value, and the sampling current in each phase of working winding may include steps S610 to 5630.

In step S610, under a condition that the input current reference value is received, current request slope limitation is performed on the input current reference value, to obtain a slope-limited input current. In some embodiments, a slope limitation module may perform a slope limitation operation on the input current reference value. Through the slope limitation operation, the input current reference value can be tracked in real time, a slope change of the input current reference value can also be limited under a condition that the input current reference value has an excessively large or small slope (increases excessively quickly or slowly). In this way, in a dynamic change process of the input current reference value, even if the currents in the working windings are different, actual currents in the working windings may remain a proportional relationship all the time, thereby avoiding to some extent an unexpected torque risk caused by current disproportion of the plurality of working windings. After the slope-limited input current is obtained in step S610, step S620 may be further performed.

In step S620, currents in phases of working windings are distributed based on the corrected angle value (for example, obtained in step S510) and the slope-limited input current, to obtain a reference current in each phase of working winding. In an embodiment in which two windings in the three-phase winding 131 are selected as the working windings, in step S620, the corrected angle value may be introduced into the current distribution operation on a basis that distribution of the currents in all the phases of windings is performed on the slope-limited input current based on the current distribution relationship described in Table 1. Therefore, under the condition that the current position angle of the motor deviates from the initial position angle, the rotor may have a compensation torque toward the initial position angle through a correction effect of the corrected angle value. After the reference current in each phase is obtained in step S620, step S630 may be further performed.

In step S630, current loop control is performed based on the reference current in each phase and the sampling current in each phase (for example, obtained in step S430), to output the duty cycle in each phase. In some embodiments, in step S630, the reference current in each phase and the sampling current in each phase may be input to a proportional-integral (PI) controller to perform current loop control.

In the embodiment shown in FIG. 6A, the slope limitation operation is introduced. The slope limitation operation is performed on the input current reference value, and then the input current reference value participates in the current distribution of the working windings. Therefore, it can be ensured that the actual current of the current loop control tracks the input current reference value in real time, and a change slope of the input current reference value is effectively limited, thereby avoiding the unexpected torque problem caused by the current disproportion of the plurality of working windings in a dynamic change process. If no slope limitation operation is performed on a current request, the input current reference value directly participates in the current distribution, and a current distribution result is directly input to the PI controller that performs the current loop control. In this case, because a same PI control parameter is selected for the phases of working windings, when reference currents in the phases are different, it cannot be ensured that the actual currents in the phases of working windings also remain a proportional relationship all the time in the dynamic change process, causing the unexpected torque risk.

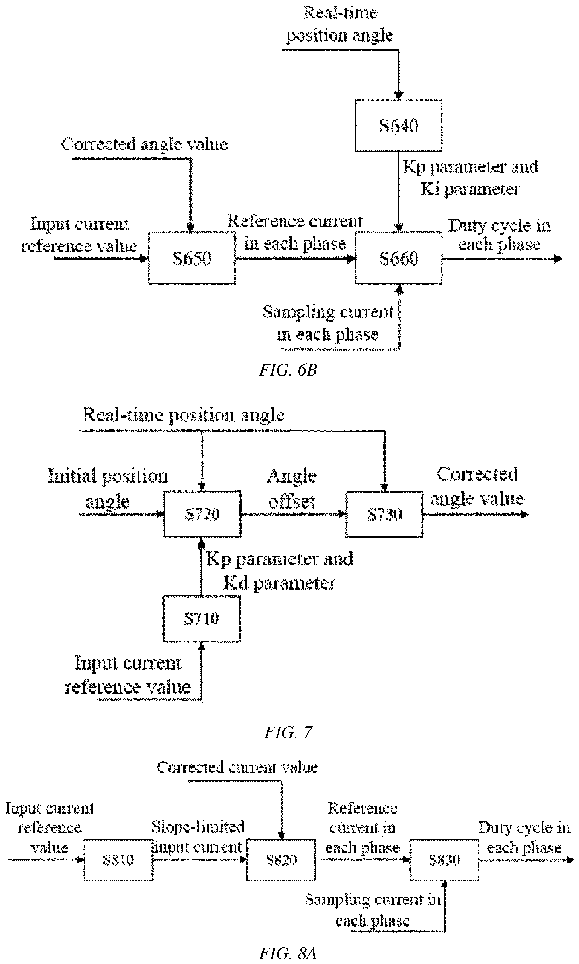

FIG. 6B is a schematic flowchart of another embodiment of a method for determining the duty cycle in each phase of working winding based on the input current reference value, the corrected angle value, and the sampling current in each phase of working winding under a condition of using the closed-loop angle control policy. For example, the implementation of step S520 is described in FIG. 6B. As shown in FIG. 6B, the method for determining the duty cycle in each phase of working winding based on the input current reference value, the corrected angle value, and the sampling current in each phase of working winding may include steps S640 to 5660.

In step S640, a Kp parameter and a Ki parameter that are used for the current loop control are determined for each phase of working winding based on the real-time position angle (for example, obtained in step S430) of the rotor. In some embodiments, the Kp parameter and the Ki parameter may be determined in a table look-up manner. Different working windings corresponding to different position angles of the rotor have different Kp parameters and different Ki parameters.

In step S650, current distribution is performed on the working windings based on the input current reference value and the corrected angle value (for example, obtained in step S510), to obtain the reference current in each phase. In an embodiment in which two windings in the three-phase winding 131 are selected as the working windings, in step S650, the corrected angle value may be introduced into the current distribution operation on a basis that distribution of the currents in all the phases of windings is performed on the input current reference value based on the current distribution relationship described in Table 1. Therefore, under the condition that the current position angle of the motor deviates from the initial position angle, the rotor may have a compensation torque toward the initial position angle through a correction effect of the corrected angle value. After the Kp parameter and the Ki parameter are obtained in step S640 and the reference value in each phase is obtained in step S650, step S660 may be further performed.

In step S660, the current loop control is performed based on the reference current in each phase, the Kp parameter, the Ki parameter, and the sampling current in each phase (for example, obtained in step S430), to output the duty cycle in each phase. In some embodiments, in step S660, the Kp parameter and the Ki parameter may be applied to the PI controller, so that the current loop control is performed through PI control, to obtain the duty cycle applied to each working winding.

Compared with the manner in which the slope limitation operation is performed on the input current reference value in FIG. 6A, the embodiment shown in FIG. 6B differs in that the slope limitation operation is not performed on the input current reference value, but the phases of working windings use different current loop PI control parameters for different positions of the rotor, and the current loop PI control parameters of the phases of working windings may be obtained based on the position angle of the rotor through table look-up. The manner in which the PI control parameters are obtained in real time based on the real-time position angle of the rotor in FIG. 6B can also eliminate the unexpected torque problem of the rotor in the dynamic current change process.

FIG. 7 is a schematic flowchart of a method for performing closed-loop angle correction according to an embodiment of the disclosure. For example, the implementation of step S510 is described in FIG. 7. As shown in FIG. 7, the method for performing closed-loop angle correction may include steps S710 to 5730.

In step S710, a Kp parameter and a Kd parameter that are used for position loop control are determined based on the input current reference value (for example, from the BMS). In some embodiments, the Kp parameter and the Kd parameter may be determined based on the input current reference value in a table look-up manner. Different input current reference values may correspond to different Kp parameters and different Kd parameters. With consideration of impact of a current on inductance, the input current reference value is introduced into embodiments of the disclosure. A proportionality coefficient of the position loop control (for example, PD control) is adjusted in real time based on the input current reference value, to ensure control stability. After the Kp parameter and the Kd parameter are obtained in step S710, step S720 may be further performed.

In step S720, the position loop control is performed based on the real-time position angle (for example, obtained in step S430) and the initial position angle (for example, obtained in step S410) of the rotor, the Kp parameter, and the Kd parameter, to output an angle offset. In some embodiments, the position loop control may be performed through the proportional-derivative (PD) control, to generate the angle offset. After the angle offset is obtained in step S720, step S730 may be further performed.

In step S730, the corrected angle value is determined based on the real-time position angle of the rotor and the angle offset. For example, the corrected angle value may be obtained by superposing the angle offset and the real-time position angle of the rotor.

In some embodiments, before the angle offset is added to the real-time position angle, amplitude limiting may be further performed on the angle offset. For example, an upper offset limit and a lower offset limit of the angle offset may be calibrated. Under a condition that the angle offset is greater than the upper offset limit, the upper offset limit is used as an updated angle offset. Under a condition that the angle offset is less than the lower offset limit, the lower offset limit is used as an updated angle offset. The amplitude limiting is performed on the angle offset. Therefore, under a condition that the angle offset is excessively large, an angle correction amplitude may be limited, to avoid excessive correction. In addition, under a condition that the angle offset is excessively small, an angle correction amplitude may be compensated for, to avoid insufficient correction.

As described above, in some embodiments, the corrected angle value obtained through the closed-loop angle correction may be used for subsequent current distribution operations (for example, steps S620 and S650). In this embodiment of the disclosure, the position angle of the rotor is monitored in real time. On this basis, distribution of the currents in the phases of working windings is controlled in real time based on an offset between the real-time position angle and the initial position angle of the rotor, to compensate for the offset of the current position of the rotor and stabilize the rotor at the initial position angle.

FIG. 8A is a schematic flowchart of an embodiment of a method for determining the duty cycle in each phase of working winding under a condition of using the dual-loop control policy. For example, the implementation of step S540 is described in FIG. 8A. As shown in FIG. 8A, the method for determining the duty cycle in each phase of working winding based on the input current reference value, the corrected current value, and the sampling current in each phase of working winding may include steps S810 to S830.

In step S810, slope limitation is performed on the input current reference value, to obtain the slope-limited input current. Compared with the embodiment shown in FIG. 6A, the embodiment shown in FIG. 8A has a similarity that the currents in the plurality of working windings are controlled through the slope limitation to remain a proportional relationship. After the slope-limited input current is obtained in step S810, step S820 may be further performed.

In step S820, the currents in the phases of working windings are distributed based on the corrected current value (obtained in step S530) and the slope-limited input current, to obtain the reference current in each phase of working winding. In an embodiment in which two windings in the three-phase winding 131 are selected as the working windings, in step S820, the corrected current value may be directly used for correcting the distribution of the currents in all the phases of windings on a basis that distribution of the currents in all the phases of windings is performed on the slope-limited input current based on the current distribution relationship described in Table 1. Therefore, under the condition that the current position angle of the rotor deviates from the initial position angle, the rotor may have a compensation torque toward the initial position angle through a correction effect of the corrected current value. After the reference current in each phase is obtained in step S820, step S830 may be further performed.

In step S830, the current loop control is performed based on the reference current in each phase and the sampling current in each phase of working winding (for example, obtained in step S430), to output the duty cycle in each phase. In some embodiments, the current loop control may be performed through the PI control, to obtain the duty cycle applied to each working winding.

The embodiment shown in FIG. 8A and the embodiment shown in FIG. 6A have a similarity that the slope-limited operation is introduced, the current distribution policy of the slope limitation ensures that the currents in the phases of working windings may proportionally increase and decrease, so that the magnetic field synthesized by the currents in the phases is located near the direct axis of the motor all the time, thereby ensuring that no unexpected torque is generated in the dynamic current change process.

FIG. 8B is a schematic flowchart of another embodiment of a method for determining the duty cycle in each phase of working winding under a condition of using the dual-loop control policy. For example, the implementation of step S540 is described in FIG. 8B. As shown in FIG. 8B, the method for determining the duty cycle in each phase of working winding based on the input current reference value, the corrected current value, and the sampling current in each phase of working winding may include steps S840 to 5860.

In step S840, the Kp parameter and the Ki parameter that are used for the current loop control are determined for the phases of working windings based on the real-time position angle (for example, obtained in step S430) of the rotor. In some embodiments, the Kp parameter and the Ki parameter may be determined in a table look-up manner. Different working windings corresponding to different position angles of the rotor have different Kp parameters and different Ki parameters.

In step S850, the current distribution is performed on the working windings based on the input current reference value and the corrected current value (for example, obtained in step S530), to obtain the reference current in each phase. In an embodiment in which two windings in the three-phase winding 131 are selected as the working windings, in step S850, the corrected current value may be directly used for correcting the distribution of the currents in all the phases of windings on a basis that distribution of the currents in all the phases of windings is performed on the input current reference value based on the current distribution relationship described in Table 1. Therefore, under the condition that the current position angle of the rotor deviates from the initial position angle, the rotor may have a compensation torque toward the initial position angle through a correction effect of the corrected current value. After the Kp parameter and the Ki parameter are obtained in step S840 and the reference current in each phase is obtained in step S850, step S860 may be further performed.

In step S860, the current loop control is performed based on the reference current in each phase, the Kp parameter, the Ki parameter, and the sampling current in each phase (for example, obtained in step S430), to output the duty cycle in each phase. In some embodiments, in step S860, the Kp parameter and the Ki parameter may be applied to the PI controller, so that the current loop control is performed through the PI control, to obtain the duty cycle applied to each working winding.

The embodiment shown in FIG. 8B and the embodiment shown in FIG. 6B have a similarity that the phases of working windings use different current loop PI control parameters for different positions of the rotor, thereby eliminating the unexpected torque problem of the rotor in the dynamic current change process.

FIG. 9 is a schematic flowchart of a method for performing dual-loop control according to one or more embodiments of the disclosure. For example, the implementation of step S530 is described in FIG. 9. As shown in FIG. 9, the method for performing dual-loop control includes steps S910 to 5930.

In step S910, the position loop control is performed based on the real-time position angle and the initial position angle (for example, obtained in steps S410 and S430) of the rotor, to output a reference rotational speed. In some embodiments, the position loop control may be performed through proportional (P) control or the PI control, to generate the reference rotational speed. After the reference rotational speed is obtained in step S910, step S920 may be further performed.

In step S920, rotational speed loop control is performed based on the reference rotational speed and the measured real-time rotational speed (in step S430), to output a reference torque. In some embodiments, the rotational speed loop control may be performed through the P control or the PI control, to generate the reference torque. For example, under a condition that the P control is used for generating the reference rotational speed, the PI control may be used for generating the reference torque; or under a condition that the PI control is used for generating the reference rotational speed, the P control may be used for generating the reference torque. After the reference torque is obtained in step S920, step S930 may be further performed.

In step S930, the reference torque is converted into the corrected current value through data processing. In step S930, the torque request may be converted into a current request.

The position loop control and the rotational speed loop control are performed in the method for obtaining the corrected current value described in steps S910 to S930. Therefore, the above method for obtaining the corrected current value is referred to as the method for performing the dual-loop control in the specification. As described above, the corrected current value obtained through the dual-loop control may be separately applied to steps S820 and S850, to participate in the distribution of the currents in the phases of working windings. Therefore, under the condition that the current position angle of the rotor deviates from the initial position angle, the current distribution may be corrected, to compensate for the torque and stabilize the rotor near an initial position.

In embodiments of the disclosure, the current position angle of the rotor is monitored in real time. When the current position angle of the motor deviates from the initial position angle, the closed-loop angle control policy or the dual-loop control policy may be used for additionally generating the compensation torque toward the initial position angle of the rotor, to ensure that the rotor stably operates near the initial position all the time.

The following describes with reference to FIG. 10 the motor position control system 1000 according to one or more embodiments of the disclosure.

FIG. 10 is a schematic diagram of a structure of the motor position control system 1000 according to one or more embodiments of the disclosure.

As shown in FIG. 10, the motor position control system 1000 may include a memory 1010 and a processor 1020. The memory 1010 and the processor 1020 may communicate with each other. In some embodiments, the memory 1010 may be a non-volatile memory such as a flash memory, a ROM, a hard disk drive, a magnetic disk, and a compact disc. In other embodiments, the memory 1010 may alternatively be another type of memory. The memory 1010 may be configured to store instructions. The processor 1020 may be configured to execute the instructions to cause the motor position control system 1000 to perform the motor position control method 400 according to one or more embodiments of the disclosure.

The disclosure further provides a vehicle. The vehicle includes any one of the motor position control systems 1000 described above in embodiments of the disclosure. The vehicle in the disclosure is intended to indicate any suitable vehicle having a drive system including at least a battery, a power conversion device, and a drive motor, for example, a hybrid vehicle, an electric vehicle, a plug-in hybrid electric vehicle, and the like. The hybrid vehicle is a vehicle with two or more power sources, such as a vehicle powered by a gasoline engine and an electric motor.

According to another aspect of the disclosure, a computer-readable storage medium is provided, in which instructions are stored, and when the instructions are executed by a processor, the processor is caused to perform any one of the motor position control methods 400 described above. The computer-readable medium in the disclosure includes various types of computer storage media, and may be any usable medium accessible to a general-purpose or special-purpose computer. For example, the computer-readable medium may include a RAM, a ROM, an EPROM, an E2PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. Data is usually copied magnetically in a disk used herein, while data is usually copied optically by using lasers in a disc. A combination thereof shall also fall within the scope of protection of the computer-readable media. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete assemblies in a user terminal.

The motor position control method 400 and the motor position control system 1000 provided in the disclosure can resolve the unexpected torque problem caused by a non-zero direct-axis current vector to boost charging. In addition, during charging performed when the motor rotor is in the demagnetizing state, keeping the position of the rotor from rotating is a critical stability problem. A measurement offset of the current sensor and the calibration offset of the rotary transformer increase instability. In the disclosure, the closed-loop control policy is introduced, so that the current position angle of the rotor can be monitored in real time, to ensure that the rotor stably operates near the initial position angle all the time. During charging performed when the rotor is in the magnetizing state or the demagnetizing state, the motor position control method 400 and the motor position control system 1000 in the disclosure may be used for effectively avoiding unexpected rotation of the rotor.

The related user personal information that may be involved in the embodiments of the disclosure is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed by the applicant may vary according to a specific product/service scenario, depends on the specific scenario in which the user uses the product/service, and may involve account information, device information, driving information, vehicle information, or other related information of the user. The applicant treats and handles the user personal information with a high degree of diligence.

The applicant attaches great importance to the security of the user personal information and has taken appropriate and feasible security measures in line with industry standards to protect the user information and prevent unauthorized access, public disclosure, use, modification, damage or loss of the personal information.

The foregoing descriptions are merely the implementations of the disclosure, but are not intended to limit the scope of protection of the disclosure. Any feasible variation or replacement conceived by a person skilled in the art within the technical scope disclosed in the disclosure shall fall within the scope of protection of the disclosure. Without conflicts, the implementations of the disclosure and features in the implementations may also be combined with each other. The scope of protection of the disclosure shall be subject to recitations of the claims.

**Claims**

1. A motor position control method, wherein the motor comprises a stator and a rotor, and the motor position control method comprises:

   obtaining an initial position angle of the rotor;
   selecting working windings from a three-phase winding of the stator;
   obtaining in real time a real-time position angle of the rotor and a sampling current in each phase flowing through the working windings; and
   determining a duty cycle in each phase of working winding based on the initial position angle, the real-time position angle, the sampling current in each phase, and an input current reference value, to substantially stabilize a position angle of the rotor at the initial position angle.

2. The motor position control method according to claim 1, wherein the determining a duty cycle in each phase of working winding based on the initial position angle, the real-time position angle, the sampling current in each phase, and an input current reference value comprises:

   performing closed-loop angle correction based on the initial position angle and the real-time position angle, to obtain a corrected angle value; and
   determining the duty cycle in each phase based on the sampling current in each phase, the corrected angle value, and the input current reference value.

3. The motor position control method according to claim 2, wherein the determining the duty cycle in each phase based on the sampling current in each phase, the corrected angle value, and the input current reference value comprises:

   performing current request slope limitation on the input current reference value, to obtain a slope-limited input current;
   distributing currents in the phases of working windings based on the corrected angle value and the slope-limited input current, to obtain a reference current in each phase of working winding; and
   performing current loop control based on the reference current in each phase and the sampling current in each phase, to output the duty cycle in each phase.

4. The motor position control method according to claim 2, wherein the determining the duty cycle in each phase based on the sampling current in each phase, the corrected angle value, and the input current reference value comprises:

   determining, for the working windings based on the real-time position angle, a Kp parameter and a Ki parameter that are used for current loop control;
   performing current distribution on the working windings based on the input current reference value and the corrected angle value, to obtain a reference current in each phase; and
   performing the current loop control based on the reference current in each phase, the Kp parameter, and the Ki parameter, to output the duty cycle in each phase.

5. The motor position control method according to claim 2, wherein the performing closed-loop angle correction based on the initial position angle and the real-time position angle, to obtain a corrected angle value comprises:

   determining, based on the input current reference value, a Kp parameter and a Kd parameter that are used for position loop control;
   performing the position loop control based on the real-time position angle, the initial position angle, the Kp parameter, and the Kd parameter, to output an angle offset; and
   determining the corrected angle value based on the real-time position angle and the angle offset.

6. The motor position control method according to claim 1, wherein the determining a duty cycle in each phase of working winding based on the initial position angle, the real-time position angle, the sampling current in each phase, and an input current reference value comprises:

obtaining a real-time rotational speed of the rotor in real time;
determining a corrected current value based on the real-time position angle, the initial position angle, and the real-time rotational speed; and
determining the duty cycle in each phase based on the sampling current in each phase, the corrected current value, and the input current reference value.

7. The motor position control method according to claim 6, wherein the determining the duty cycle in each phase based on the sampling current in each phase, the corrected current value, and the input current reference value comprises:

performing slope limitation on the input current reference value, to obtain a slope-limited input current;
distributing currents in the phases of working windings based on the corrected current value and the slope-limited input current, to obtain a reference current in each phase of working winding; and
performing current loop control based on the reference current in each phase and the sampling current in each phase, to output the duty cycle in each phase.

8. A motor position control system(1000), wherein the motor position control system comprises:

a memory(1010) configured to store instructions; and
a processor(1020) configured to execute the instructions to cause the motor position control system to perform a motor position control method according to any one of claims 1 to 7.

9. A vehicle, comprising a motor position control system according to claim 8.

10. A computer-readable storage medium, wherein the computer-readable storage medium stores instructions; and the instructions, when executed by a processor, cause the processor to perform a motor position control method according to any one of claims 1 to 7.

*FIG. 1*

*FIG. 2A*

FIG. 2B

FIG. 3A

*FIG. 3B*

400

*FIG. 4*

FIG. 5A

FIG. 5B

FIG. 6A

Real-time
position angle

↓

S640

Kp parameter and
Ki parameter

Corrected angle value

↓

Input current
reference value → S650 → Reference current
in each phase → S660 → Duty cycle in
each phase →

↑

Sampling current
in each phase

*FIG. 6B*

Real-time position angle

Initial position
angle → S720 → Angle
offset → S730 → Corrected
angle value →

↑

Kp parameter and
Kd parameter

S710

↑

Input current
reference value

*FIG. 7*

Corrected current value

↓

Input current
reference
value → S810 → Slope-limited
input current → S820 → Reference
current in
each phase → S830 → Duty cycle in
each phase →

↑

Sampling current in
each phase

*FIG. 8A*

Real-time position angle

S840

Kp parameter and
Ki parameter

Corrected current value

Input current
reference value
→ S850 →
Reference current
in each phase
→ S860 →
Duty cycle in
each phase

Sampling current
in each phase

*FIG. 8B*

Real-time position angle

Initial
position
angle
→ S910 →
Reference
rotational
speed
→ S920 →
Reference
torque
→ S930 →
Corrected
current value

Real-time
rotational speed

*FIG. 9*

1000

1010

↕

1020

*FIG. 10*

Europäisches
Patentamt

European
Patent Office

Office européen
des brevets

# EUROPEAN SEARCH REPORT

Application Number

EP 23 21 9918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 160 903 A1 (HUAWEI DIGITAL POWER TECH CO LTD [CN]) 5 April 2023 (2023-04-05) | 1,2,8-10 | INV. H02P21/32 |
| Y | * paragraph [0002] - paragraph [0047]; | 4,6 | H02P25/026 |
| A | figures 1-17 * * paragraph [0075] - paragraph [0146] * ----- | 3,5,7 | |
| Y | US 2022/329184 A1 (LIAN YUBO [CN] ET AL) 13 October 2022 (2022-10-13) * paragraph [0002]; figures 17, 18 * * paragraph [0020] * * paragraph [0181] - paragraph [0186] * ----- | 4 | |
| Y | CHENG HE ET AL: "An Integrated SRM Powertrain Topology for Plug-In Hybrid Electric Vehicles With Multiple Driving and Onboard Charging Capabilities", IEEE TRANSACTIONS ON TRANSPORTATION ELECTRIFICATION, IEEE, vol. 6, no. 2, 9 April 2020 (2020-04-09), pages 578-591, XP011794633, DOI: 10.1109/TTE.2020.2987167 [retrieved on 2020-06-18] * page 583, paragraph III.A; figure 10 * ----- | 6 | |

TECHNICAL FIELDS
SEARCHED (IPC)

H02P

The present search report has been drawn up for all claims

| Place of search | Date of completion of the search | Examiner |
|---|---|---|
| Munich | 5 June 2024 | Roussel, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 23 21 9918

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2024

| Patent document cited in search report | | Publication date | Patent family member(s) | | Publication date |
|---|---|---|---|---|---|
| EP 4160903 | A1 | 05-04-2023 | CN | 113928129 A | 14-01-2022 |
| | | | EP | 4160903 A1 | 05-04-2023 |
| | | | JP | 7410247 B2 | 09-01-2024 |
| | | | JP | 2023051850 A | 11-04-2023 |
| US 2022329184 | A1 | 13-10-2022 | CN | 112644339 A | 13-04-2021 |
| | | | EP | 4019322 A1 | 29-06-2022 |
| | | | JP | 7346725 B2 | 19-09-2023 |
| | | | JP | 2022550332 A | 01-12-2022 |
| | | | KR | 20220051256 A | 26-04-2022 |
| | | | US | 2022329184 A1 | 13-10-2022 |
| | | | WO | 2021057340 A1 | 01-04-2021 |

EPO FORM P0459

For more details about this annex : see Official Journal of the European Patent Office, No. 12/82